# EUROPÄISCHE PATENTSCHRIFT

(11) **EP 3 785 953 B1**
(45) Veröffentlichungstag und Bekanntmachung des Hinweises auf die Patenterteilung: **15.06.2022**
(21) Anmeldenummer: 20187331.2
(22) Anmeldetag: 23.07.2020
(51) Int. Cl.: B60H 1/22, B60S 1/48, B60H 1/00, F23K 5/20, B60K 15/03

(54) **FAHRZEUGTEMPERIERSYSTEM**
TEMPERATURE REGULATING SYSTEM FOR A VEHICLE
SYSTÈME DE MISE EN TEMPÉRATURE POUR VÉHICULE

(30) Priorität: 26.08.2019 DE 102019122810
(43) Veröffentlichungstag der Anmeldung: 03.03.2021
(73) Patentinhaber: Eberspächer Climate Control Systems GmbH, 73730 Esslingen (DE)
(72) Erfinder: Bauer, Thomas, 72581 Dettingen (DE)
(74) Vertreter: Ruttensperger Lachnit Trossin Gomoll

(56) Entgegenhaltungen:
- DE-A1-102011 085 076
- DE-A1-102013 003 039
- DE-A1-102016 119 133
- FR-A3- 2 934 201
- JP-A- 2016 124 478

## Beschreibung

Die vorliegende Erfindung betrifft ein Fahrzeugtemperiersystem, das in besonders bevorzugter Weise Anwendung finden kann in Hybrid-Fahrzeugen.

Um in derartigen Fahrzeugen, welche im allgemeinen keinen oder nur einen vergleichsweise kleinen Brennstofftank aufweisen, die zur Erwärmung des Fahrzeugs erforderliche Wärmeenergie bereitzustellen, ist es bekannt, Wärmepumpensysteme einzusetzen, die, elektrisch betrieben, in einem Heizbetriebsmodus Wärme auf die in einen Fahrzeuginnenraum einzuleitende Luft übertragen können und in einem Kühlmodus von der in einen Fahrzeuginnenraum einzuleitenden Luft Wärme aufnehmen können. Derartige Wärmepumpensysteme können in einem Temperaturbereich zwischen 0°C und 20°C mit vergleichsweise hohem Wirkungsgrad arbeiten. Bei deutlich niedrigeren oder höheren Umgebungstemperaturen nimmt der Wirkungsgrad jedoch ab. Der Einsatz von mit Brennstoff, wie zum Beispiel Benzin oder Diesel, betriebenen Heizgeräten setzt das Vorhandensein eines Brennstofftanks voraus und ist aufgrund des Schadstoffausstoßes und der zunehmenden Anforderungen an die Umweltverträglichkeit von Fahrzeugen oftmals unerwünscht.

Aus der DE 10 2013 003 039 A1 ist ein Fahrzeugtemperiersystem bekannt, bei welchem in einem Kühlmittelkreislauf zirkulierendes und einen Wassermantel einer Brennkraftmaschine durchströmendes Kühlmittel auch durch einen in einem Kraftstofftank für die Brennkraftmaschine angeordneten Wärmetauscher geleitet werden kann. In der Brennkraftmaschine im Verbrennungsbetrieb entstehende Wärme kann somit auf im Kraftstofftank enthaltenen Kraftstoff übertragen und in diesem gespeichert werden. Das im Kühlmittelkreislauf zirkulierendes Kühlmittel kann auch in thermische Wechselwirkung mit einer Wärmepumpe gebracht werden, um im Kraftstoff gespeicherte Wärme oder in der Brennkraftmaschine generierte Wärme in den Fahrgastraum eines Fahrzeugs zu leiten.

Aus der FR 2 934 201 A3 ist eine elektrisch betreibbare Heizeinrichtung für ein elektromotorisch betriebenes Fahrzeug bekannt.

Die DE 10 2011 085 076 A1 offenbart ein Fahrzeugheizgerät, bei welchem ein einen Wärmetauscher durchströmendes Wärmeträgermedium sowohl im Verbrennungsbetrieb in einem Brennerbereich des Heizgeräts generierte Wärme, als auch durch eine elektrisch erregbare Heizeinheit generierte Wärme aufnehmen kann. Die JP 2016 124478 A offenbart einen Kraftstofftank, in dessen Mantel Phasenwechselmaterial zum Speichern von Energie bei übermäßiger Erwärmung des im Kraftstofftank enthaltenen Kraftstoffs vorgesehen ist.

Die DE 10 2016 119 133 A1 offenbart ein Verfahren zum Bestimmen der Zusammensetzung einer direkt in die Zylinder einer Brennkraftmaschine einzuspritzenden Klopfregelungsflüssigkeit.

Es ist die Aufgabe der vorliegenden Erfindung, ein Fahrzeugtemperiersystem vorzusehen, welches mit hohem Wirkungsgrad und geringer Umweltbelastung betrieben werden kann.

Erfindungsgemäß wird diese Aufgabe gelöst durch ein Fahrzeugtemperiersystem, insbesondere für Hybrid-Fahrzeuge gemäß Anspruch 1, umfassend:
- ein mit Brennstoff betreibbares Heizgerät mit einer ersten Wärmetauscheranordnung zur Übertragung von in dem Heizgerät bereitgestellter Wärme auf in einem ersten Wärmeträgermediumkreislauf vorgesehenes erstes Wärmeträgermedium,
- einen Betriebsmitteltank zur Aufnahme eines flüssigen Betriebsmittels,
- eine zweite Wärmetauscheranordnung zur Wärmeübertragung zwischen dem im ersten Wärmeträgermediumkreislauf vorgesehenen ersten Wärmeträgermedium und in dem Betriebsmitteltank enthaltenem Energiespeichermaterial,
- eine dritte Wärmetauscheranordnung zur Wärmeübertragung zwischen dem im ersten Wärmeträgermediumkreislauf vorgesehenen ersten Wärmeträgermedium und in einem zweiten Wärmeträgermediumkreislauf vorgesehenem zweiten Wärmeträgermedium.

Um in dem Betriebsmitteltank enthaltenes Betriebsmittel in einem Fahrzeug nutzbar zu machen, ist in einer Betriebsmittelleitung eine Betriebsmittelpumpe vorgesehen zum Fördern von in dem Betriebsmitteltank enthaltenem Betriebsmittel als Brennstoff zu einem Brennerbereich des Heizgeräts und zum Fördern von in dem Betriebsmitteltank enthaltenem Betriebsmittel als Brennstoffadditiv zu einem Brennstofftank für eine Brennkraftmaschine.

Das Betriebsmittel kann somit als Brennstoff im Heizgerät genutzt werden. Auch als Additiv in dem in einer Brennkraftmaschine beispielsweise in einem Hybrid-Fahrzeug zu verbrennenden Brennstoff kann das Betriebsmittel eingesetzt werden, was zu einer Verringerung des Schadstoffausstoßes beitragen kann.

Um diese verschiedenen Systembereiche eines Fahrzeugs mit Betriebsmittel speisen zu können, ist in der Betriebsmittelleitung stromabwärts der Betriebsmittelpumpe ein Betriebsmittel-Umschaltventil vorgesehen, wobei das Betriebsmittel-Umschaltventil dazu ausgebildet ist, wahlweise eine Verbindung zwischen der Betriebsmittelleitung und dem Brennerbereich des Heizgeräts oder/und dem Brennstofftank herzustellen.

Anders als in herkömmlichen Fahrzeugtemperiersystemen, bei welchen das in einem Heizgerät erwärmte erste Wärmeträgermedium im Allgemeinen dazu genutzt wird, die in einen Fahrzeuginnenraum einzuleitende Luft direkt zu erwärmen, stellt bei dem erfindungsgemäßen Aufbau der erste Wärmeträgermediumkreislauf eine thermische Verbindung her zwischen dem im zweiten Wärmeträgermediumkreislauf zirkulierenden zweiten Wärmeträgermedium und einem im Betriebsmitteltank vorgesehenen Energiespeichermaterial. Somit kann bei Bedarf Wärme aus dem Energiespeichermaterial im ersten Wärmeträgermedium aufgenommen und auf das zweite Wärmeträgermedium übertragen werden oder Wärme aus dem zweiten Wärmeträgermedium abgeführt und im Energiespeichermaterial gespeichert werden. Zusätzlich kann das Heizgerät zur Bereitstellung von Wärme genutzt werden, um diese über das erste Wärmeträgermedium auf das zweite Wärmeträgermedium zu übertragen oder im Energiespeichermaterial zu speichern. Das Energiespeichermaterial bildet somit einen Puffer, der einen effizienten Temperierbetrieb eines den zweiten Wärmeträgermediumkreislauf umfassenden Systems auch bei vergleichsweise hohen oder vergleichsweise niedrigen Umgebungstemperaturen gestattet.

Um im ersten Wärmeträgermediumkreislauf eine Zirkulation des ersten Wärmeträgermediums aufbauen zu können, kann dieser eine Wärmeträgermediumpumpe zum Fördern des ersten Wärmeträgermediums durch die erste Wärmetauscheranordnung, die zweite Wärmetauscheranordnung und die dritte Wärmetauscheranordnung umfassen.

Eine besonders effiziente Betriebscharakteristik kann erreicht werden, wenn das Energiespeichermaterial in dem Betriebsmitteltank enthaltenes Betriebsmittel umfasst. Die zweite Wärmetauscheranordnung kann dabei einen ersten Wärmetauscherbereich zur Übertragung von Wärme zwischen dem ersten Wärmeträgermedium und dem in dem Betriebsmitteltank enthaltenen Betriebsmittel umfassen. Das in einem Fahrzeug auch in anderer, nachfolgend noch erläuterter Weise nutzbare Betriebsmittel kann somit gleichzeitig auch die Funktion eines Energiespeichers erfüllen.

Bei dem erfindungsgemäßen Fahrzeugtemperiersystem kann in dem Betriebsmitteltank eine Phasenwechselmaterial-Energiespeicheranordnung vorgesehen sein, wobei das Energiespeichermaterial in der Phasenwechselmaterial-Energiespeicheranordnung vorgesehenes Phasenwechselmaterial umfasst. Um eine thermische Wechselwirkung zwischen dem Phasenwechselmaterial und dem ersten Wärmeträgermedium gewährleisten zu können, kann dabei die zweite Wärmetauscheranordnung einen zweiten Wärmetauscherbereich zur Übertragung von Wärme zwischen dem ersten Wärmeträgermedium und dem Phasenwechselmaterial umfassen.

Die Betriebsmittelpumpe kann ferner zum Fördern von in dem Betriebsmitteltank enthaltenem Betriebsmittel als Wischflüssigkeitsadditiv zu einem Wischflüssigkeitstank vorgesehen sein, so dass das Betriebsmittel auch als Additiv für die Wischflüssigkeit in einem Fahrzeug genutzt werden kann, um beispielsweise im Winterbetrieb diese vor dem Einfrieren zu schützen.

Dazu kann das Betriebsmittel-Umschaltventil dazu ausgebildet sein, wahlweise eine Verbindung zwischen der Betriebsmittelleitung und dem Brennerbereich des Heizgeräts oder/und dem Wischflüssigkeitstank oder/und dem Brennstofftank herzustellen.

Bei einem einfach und kostengünstig aufzubauenden System, kann das Heizgerät eine elektrisch erregbare Heizanordnung zur Erwärmung des ersten Wärmeträgermediums in der ersten Wärmetauscheranordnung umfassen. Beispielweise kann die elektrisch erregbare Heizanordnung eine PTC-Heizanordnung umfassen.

Dem zweiten Wärmeträgermediumkreislauf kann gemäß den Prinzipien der vorliegenden Erfindung ein Wärmepumpensystem zugeordnet sein. Das Wärmepumpensystem kann dazu ausgebildet sein, beispielsweise in einem Kühlbetrieb im Bereich der dritten Wärmetauscheranordnung Wärme von dem zweiten Wärmeträgermedium auf das erste Wärmeträgermedium zu übertragen oder beispielsweise in einem Heizbetrieb Wärme von dem ersten Wärmeträgermedium im zweiten Wärmeträgermedium aufzunehmen.

Gemäß einem besonders vorteilhaften Aspekt kann das in dem Betriebsmitteltank enthaltene Betriebsmittel Ethanol sein oder enthalten. Ethanol eignet sich sowohl als Brennstoff für ein brennstoffbetriebenes Heizgerät, wobei bei Einsatz von Ethanol als Betriebsmittel ein schadstoffarmer Betrieb eines derartigen Heizgeräts gewährleistet werden kann. Durch das Beimengen von Ethanol zu der Wischflüssigkeit in einem Fahrzeug kann dessen Gefrierpunkt gesenkt und somit die Gefahr, dass die Wischflüssigkeit im Winter einfriert, gemindert werden. Weist ein Fahrzeug eine Brennkraftmaschine als Antriebsaggregat auf, kann Ethanol auch als dem Brennstoff für die Brennkraftmaschine beizumengendes und damit zu einer deutlichen Verringerung des Stickoxidausstoßes beitragendes Additiv genutzt werden.

Um den Betriebsmitteltank effizient als Energiespeicher nutzen zu können, wird weiter vorgeschlagen, dass dieser mit Isoliermaterial umgeben ist. Derartiges Isoliermaterial kann beispielsweise Fasermatten-Material oder geschäumtes Material umfassen.

Die vorliegende Erfindung wird nachfolgend mit Bezug auf die beiliegenden Figuren detailliert beschrieben. Es zeigt:
Fig. 1 in prinzipartiger Darstellung den Aufbau eines Fahrzeugtemperiersystems;
Fig. 2 in prinzipartiger Darstellung ein Wärmepumpensystem für ein Fahrzeug.

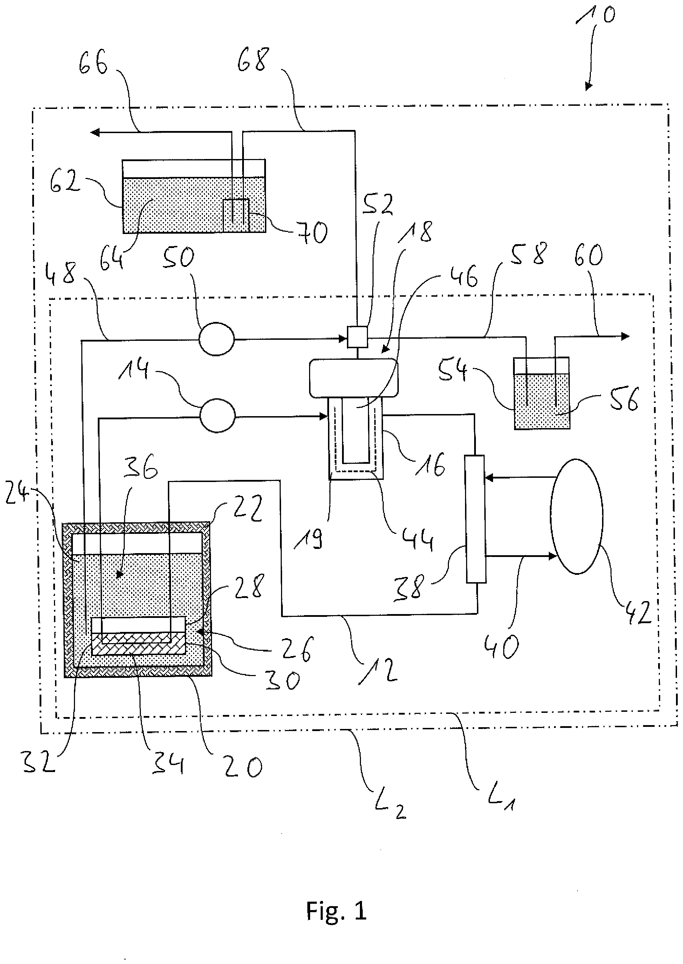

In Fig. 1 ist ein Fahrzeugtemperiersystem allgemein mit 10 bezeichnet. Das in besonders vorteilhafter Weise in Hybrid-Fahrzeugen einsetzbare Fahrzeugtemperiersystem umfasst als zentralen Systembereich einen ersten Wärmeträgermediumkreislauf 12. Im ersten Wärmeträgermediumkreislauf 12 zirkuliert, angetrieben durch eine Wärmeträgermediumpumpe 14, ein flüssiges erstes Wärmeträgermedium, beispielsweise Wasser oder eine Wasser enthaltende Flüssigkeit. In den ersten Wärmeträgermediumkreislauf 12 ist eine allgemein mit 16 bezeichnete erste Wärmetauscheranordnung eines Heizgeräts 18 integriert. Das von der Wärmeträgermediumpumpe 14 geförderte erste Wärmeträgermedium durchströmt einen Wärmeträgermediumströmungsraum 19 der ersten Wärmetauscheranordnung 16 und kann dabei in dem Heizgerät 18 generierte Wärme aufnehmen.

Das Fahrzeugtemperiersystem 10 umfasst ferner einen Betriebsmitteltank 20. Der Betriebsmitteltank 20 ist vorzugsweise im Wesentlichen vollständig von Isoliermaterial 22 umgeben, so dass darin enthaltenes flüssiges Betriebsmittel 24 nach außen hin thermisch isoliert ist. Im Betriebsmitteltank 20 ist eine zweite Wärmetauscheranordnung 26 vorgesehen, welche in den ersten Wämreträgermediumkreislauf 12 integriert ist und von dem durch die Wärmeträgermediumpumpe 14 geförderten ersten Wärmeträgermedium durchströmbar ist.

Die zweite Wärmetauscheranordnung 26 umfasst zwei Wärmetauscherbereiche 28, 30. Der erste Wärmetauscherbereich 28 ist dazu ausgebildet, eine thermische Wechselwirkung zwischen dem im ersten Wärmeträgermediumkreislauf 12 zirkulierenden ersten Wärmeträgermedium und dem im Betriebsmitteltank 20 enthaltenen Betriebsmittel 24 herzustellen, also beispielsweise Wärme von dem ersten Wärmeträgermedium direkt auf das Betriebsmittel 24 zu übertragen. Der zweite Wärmetauscherbereich 30 der zweiten Wärmetauscheranordnung 26 dient dazu, eine thermische Wechselwirkung zwischen dem ersten Wärmeträgermedium und einem in einer Phasenwechselmaterial-Energiespeicheranordnung 32 enthaltenen Phasenwechselmaterial 34 herzustellen, also beispielsweise Wärme von dem ersten Wärmeträgermedium auf das Phasenwechselmaterial 34 zu übertragen. Die Phasenwechselmaterial-Energiespeicheranordnung 32 kann somit als Latentwärmespeicher dienen und durch Herbeiführung eines Phasenwechsels in dem Phasenwechselmaterial 34 bei Erwärmung desselben Energie speichern. Somit bildet in dem in Fig. 1 dargestellten Ausgestaltungsbeispiel sowohl das im Betriebsmitteltank 20 enthaltene Betriebsmittel 24, als auch das in der Phasenwechselmaterial-Energiespeicheranordnung 32 enthaltene Phasenwechselmaterial 34 jeweils ein Energiespeichermaterial 36, in welchem aus dem im ersten Wärmeträgermediumkreislauf 12 zirkulierenden ersten Wärmeträgermedium Wärme aufgenommen und somit Energie gespeichert werden kann bzw. aus welchem Energie abgegeben werden kann.

Es ist darauf hinzuweisen, dass die zweite Wärmetauscheranordnung 26 auch so aufgebaut sein könnte, dass darin nur eine direkte thermische Wechselwirkung zwischen dem ersten Wärmeträgermedium und dem Betriebsmittel 24 erzeugt wird, während das Phasenwechselmaterial 34 dann indirekt über das erwärmte Betriebsmittel 24 erwärmt wird bzw. über das Betriebsmittel 24 Wärme abgeben kann. Andererseits könnte die zweite Wärmespeicheranordnung 26 auch so aufgebaut sein, dass darin im Wesentlichen nur eine direkte thermische Wechselwirkung zwischen dem ersten Wärmeträgermedium und dem Phasenwechselmaterial 34 entsteht. Dieses kann dann alleine das Energiespeichermaterial 36 bereitstellen oder kann durch Wärmeübertrag auf das Betriebsmittel 24 zu dessen Erwärmung beitragen, so dass auch das Betriebsmittel 24 einen Teil des Energiespeichermaterials 36 bereitstellen kann. Grundsätzlich könnte der Betriebsmitteltank 20 auch ohne die darin vorgesehene Phasenwechselmaterial-Energiespeicheranordnung 32 aufgebaut sein, so dass die zweite Wärmetauscheranordnung 26 ausschließlich eine thermische Wechselwirkung zwischen dem ersten Wärmetauschermedium und dem Betriebsmittel 24 bereitstellt und das Betriebsmittel 24 ausschließlich das Energiespeichermaterial 36 bereitstellt.

Der erste Wärmeträgermediumkreislauf 12 umfasst ferner eine dritte Wärmetauscheranordnung 38. Die dritte Wärmetauscheranordnung 38 ist dazu ausgebildet, eine thermische Wechselwirkung zwischen dem im ersten Wärmeträgermediumkreislauf 12 zirkulierenden flüssigen ersten Wärmeträgermedium und einem in einem zweiten Wärmeträgermediumkreislauf 40 zirkulierenden zweiten Wärmeträgermedium bereitzustellen. Somit besteht die Möglichkeit, in der dritten Wärmetauscheranordnung 38 Wärme von dem ersten Wärmeträgermedium auf das zweite Wärmeträgermedium oder Wärme von dem zweiten Wärmeträgermedium auf das erste Wärmeträgermedium zu übertragen.

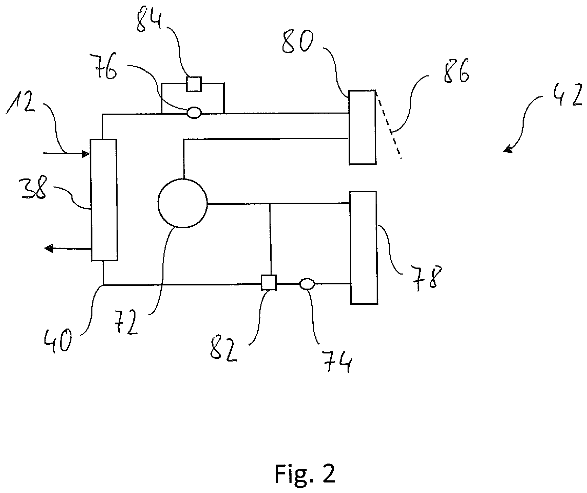

Dem zweiten Wärmeträgermediumkreislauf 40 ist ein in Fig. 1 schematisch angedeutetes und mit Bezug auf die Fig. 2 nachfolgend noch detaillierter beschriebenes Wärmepumpensystem 42 zugeordnet, über welches Wärme auf die in einem Fahrzeuginnenraum einzuleitende Luft übertragen oder von dieser abgeführt werden kann.

Das Heizgerät 18 ist im dargestellten Beispiel sowohl elektrisch als auch mit Brennstoff betreibbar. Zu diesem Zwecke umfasst das Heizgerät 18 eine elektrisch erregbare Heizanordnung 44, beispielsweise eine PTC-Heizanordnung, welche von dem im ersten Wärmeträgermediumkreislauf 12 zirkulierenden ersten Wärmeträgermedium umströmbar ist und dabei Wärme auf dieses übertragen kann. Das Heizgerät 18 umfasst ferner einen allgemein mit 46 bezeichneten Brennerbereich, welcher beispielsweise als Verdampferbrenner aufgebaut sein kann und ein Gemisch aus Brennstoff und Verbrennungsluft verbrennen kann. Die dabei entstehende Verbrennungswärme kann in der ersten Wärmetauscheranordnung 16 auf das erste Wärmeträgermedium übertragen werden.

Als Brennstoff nutzt das Heizgerät 18 das im Betriebsmitteltank 20 enthaltene Betriebsmittel. Zu diesem Zwecke ist in einer von dem Betriebsmitteltank 20 weg führenden Betriebsmittelleitung 48 eine Betriebsmittelpumpe 50 angeordnet. Die Betriebsmittelpumpe 50 fördert das Betriebsmittel 24 in Richtung zu einem nahe am Heizgerät 18 angeordneten Betriebsmittel-Umschaltventil 52. Das Betriebsmittel-Umschaltventil 52 kann beispielsweise so geschaltet werden, dass es einen Strömungsweg von der Betriebsmittelleitung 48 zum Brennerbereich 46 des Heizgeräts 18 freigibt, so dass das vom Betriebsmitteltank 20 abgezogene Betriebsmittel 24 in dem Brennerbereich 46 eingespeist, dort mit beispielsweise durch ein Seitenkanalgebläse oder ein sonstiges Verbrennungsluftgebläse geförderter Verbrennungsluft vermischt und zur Erzeugung von Verbrennungswärme verbrannt wird.

Für einen umweltfreundlichen Betrieb des Heizgeräts 12 kann als Betriebsmittel 24 beispielsweise reines Ethanol (E100) eingesetzt werden. Derartiges als Brennstoff eingesetztes Ethanol gewährleistet eine Verbrennung, bei welcher nur geringe Anteile an NOx, CO und HC generiert werden. Beispielsweise können dem Heizgerät 18 ein Drei-Wege-Katalysator und eine Lambdasonde zugeordnet sein, so dass unter Durchführung einer Lambda-Regelung eine Verbrennung im Bereich von Lambda 1 im Heizgerät 18 ablaufen kann.

Das Fahrzeugtemperiersystem 10 umfasst ferner einen Wischflüssigkeitsbehälter 54, in welchem zum Reinigen der Scheiben eines Fahrzeugs einsetzbare Wischflüssigkeit 56, beispielsweise Wasser, gespeichert sein kann. Insbesondere bei Einsatz von Ethanol als Betriebsmittel 24 kann dieses auch dazu genutzt werden, durch Beimengung zur Wischflüssigkeit 56 deren Gefrierpunkt abzusenken, um somit im Winterbetrieb das Einführen der im Wischflüssigkeitstank 54 gespeicherten Wischflüssigkeit 56 zu verhindern. Zu diesem Zwecke kann das Betriebsmittel-Umschaltventil 52 auch so gestellt werden, dass wahlweise durch die Betriebsmittelpumpe 50 Betriebsmittel 24 aus der Betriebsmittelleitung 48 über eine Versorgungsteilung 58 in den Wischflüssigkeitstank 54 eingeleitet wird, von welchem die Wischflüssigkeit 56 bzw. ein Gemisch aus Wischflüssigkeit 56 und Betriebsmittel 24 über eine weitere Versorgungsleitung 60 zu einer Scheibenwaschanlage bzw. einer Scheinwerferwaschanlage eines Fahrzeugs geleitet werden kann.

Das Fahrzeugtemperiersystem 10 umfasst ferner einen Brennstofftank 62. In diesem Brennstofftank 62 kann flüssiger Brennstoff 64, beispielsweise Benzin, gespeichert werden, der über eine Versorgungsleitung 66 zu einer Brennkraftmaschine geleitet werden kann. Ein derartiger Brennstofftank 62 ist in einem Fahrzeug dann vorhanden, wenn dieses als Antriebsaggregat oder zusätzliches Antriebsaggregat in einem Hybrid-Fahrzeug eine Brennkraftmaschine nutzt. Das Betriebsmittel 24 kann über das Betriebsmittel-Umschaltventil 52 und eine weitere Versorgungsleitung 68 auch in den Brennstofftank 62, vorzugsweise direkt in einen Schwalltopf 70, eingeleitet werden. Dort findet eine effiziente Vermischung von Brennstoff 64 und Betriebsmittel 24 statt, so dass der mit Betriebsmittel 24 vermischte Brennstoff 64 zur Brennkraftmaschine geleitet werden kann. Auch hier führt der Zusatz von Betriebsmittel 24 als Additiv insbesondere dann, wenn als Betriebsmittel 24 Ethanol eingesetzt wird, zu einem gesenkten Schadstoffausstoß der Brennkraftmaschine.

Das Betriebsmittel-Umschaltventil 52 kann so ausgebildet sein, dass es entweder eine Verbindung der Betriebsmittelleitung 48 entweder mit dem Heizgerät 18 oder dem Wischflüssigkeitstank 54 oder dem Brennstofftank 62 herstellt. Es kann somit gewährleistet werden, dass in jedem der so einrichtbaren Verbindungszustände dem jeweils ausgewählten Empfänger definiert die erforderliche Menge an Betriebsmittel 24 zugeführt werden kann, um somit beispielsweise im Heizgerät 18 die für eine gewünschte Heizleistung erforderliche Menge an Betriebsmittel 24 bereitstellen zu können bzw. im Wischflüssigkeitstank 54 sowie auch im Brennstofftank 62 das gewünschte Mischungsverhältnis aus Wischflüssigkeit 56 bzw. Brennstoff 64 und Betriebsmittel 24 bereitstellen zu können.

Mit Bezug auf Fig. 2 wird nachfolgend das in Fig. 1 angedeutete Wärmepumpensystem 42, mit welchem die in einen Fahrzeuginnenraum einzuleitende Luft thermisch konditioniert werden kann, beschrieben.

Zu erkennen ist in Fig. 2 die dritte Wärmetauscheranordnung 38, über welche eine thermische Wechselwirkung des ersten Wärmeträgermediums im ersten Wärmeträgermediumkreislauf 12 mit dem zweiten Wärmeträgermedium im zweiten Wärmeträgermediumkreislauf 40 bereitgestellt werden kann. Das zweite Wärmeträgermedium im zweiten Wärmeträgermediumkreislauf 40 ist ein Kältemittel, welches durch Druckerhöhung in einem Kompressor 72 verflüssigt werden kann und nach Druckabfall in jeweiligen Expansionsventilen 74, 76 wieder in einen gasförmigen Zustand übergeht. Dem zweiten Wärmeträgermediumkreislauf 40 sind ferner eine Kühl-Wärmetauscheranordnung 78 und eine Heiz-Wärmetauscheranordnung 80 zugeordnet. In der Kühl-Wärmetauscheranordnung 78 kann der in einen Fahrzeuginnenraum einzuleitenden Luft Wärme entzogen werden, während in der Heiz-Wärmetauscheranordnung 80 Wärme auf die in den Fahrzeuginnenraum einzuleitende Luft übertragen werden kann. In Zuordnung zu den beiden Expansionsventilen 74, 76 sind Schaltventile 82, 84 vorgesehen. Das Schaltventil 82 kann so geschaltet werden, dass es einen Strömungsweg zum Expansionsventil 74 und über dieses zur Kühl-Wärmetauscheranordnung 78 freigibt oder diesen Strömungsweg blockiert und dabei einen Strömungsweg direkt zum Kompressor 72 freigibt. Das Schaltventil 84 kann so geschaltet werden, dass es einen das Expansionsventil 76 umgehenden Strömungsweg freigibt oder gegen Durchströmung blockiert.

Im Kühlbetrieb wird das zweite Wärmeträgermedium durch den Kompressor 72 komprimiert und in Richtung zu der Heiz-Wärmetauscheranordnung 80 gefördert. Im Kühlbetrieb ist diese durch eine Abschließklappe 86 gegen Durchströmung mit Luft abgesperrt, so dass ein Wärmeübertrag in der Heiz-Wärmetauscheranordnung 80 nicht stattfindet. Das Schaltventil 84 ist in seinem den Strömungsweg um das Expansionsventil 76 freigebenden Schaltzustand, so dass das vom Kompressor 72 komprimierte und dabei erwärmte zweite Wärmeträgermedium unter Umgehung des Expansionsventils 76 das Schaltventil 84 durchströmt und über dieses in die in diesem Betriebszustand als Kondensator wirksame dritte Wärmetauscheranordnung 38 gelangt. Dort kann das zweite Wärmeträgermedium Wärme auf das im ersten Wärmeträgermediumkreislauf 12 zirkulierende ersten Wärmeträgermedium übertragen und verflüssigt über das Schaltventil 82 zum Expansionsventil 74 strömen. Dort bzw. in der in diesem Betriebszustand als Verdampfer wirksamen Kühl-Wärmetauscheranordnung 78 wird das zweite Wärmeträgermedium verdampft und kühlt sich dabei ab, so dass es in der Kühl-Wärmetauscheranordnung 78 Wärme von der diese durchströmenden und in den Fahrzeuginnenraum einzuleitenden Luft aufnehmen kann, bevor es in dem Kompressor 72 erneut komprimiert wird.

Im Heizbetrieb ist das Schaltventil 82 so gestellt, dass es einen Strömungsweg in Richtung zur Kühl-Wärmetauscheranordnung 78 blockiert, während das Schaltventil 84 so geschaltet ist, dass es den das Expansionsventil 76 umgehenden Strömungsweg blockiert. Das vom Kompressor 72 komprimierte und dabei erwärmte zweite Wärmeträgermedium gibt in der in diesem Betriebszustand als Kondensator wirksamen Heiz-Wärmetauscheranordnung 80, welche nunmehr durch Verstellen der Abschließklappe 86 zur Durchströmung mit Luft freigegeben ist, Wärme auf die Luft ab, wird dabei abgekühlt und verflüssigt. Das verflüssigte zweite Wärmeträgermedium strömt in Richtung zum Expansionsventil 76, wird dort bzw. in der im Strömungsweg dann folgenden und in diesem Betriebszustand als Verdampfer wirksamen dritten Wärmetauscheranordnung 38 verflüssigt und dabei abgekühlt. In der dritten Wärmetauscheranordnung 38 kann das zweite Wärmeträgermedium Wärme vom ersten Wärmeträgermedium aufnehmen, so dass es bereits wieder erwärmt über das Schaltventil 82 wieder zum Kompressor 72 strömen kann.

Im Betrieb des in Fig. 1 dargestellten Fahrzeugtemperiersystems 10 kann abhängig davon, ob im Wärmepumpensystem 42 Wärme aufgenommen oder Wärme abgegeben werden soll, das Heizgerät 18 entweder im Verbrennungsbetrieb oder durch elektrische Erregung Wärme erzeugen und auf das erste Wärmeträgermedium übertragen, so dass dieses in der dritten Wärmetauscheranordnung 38 Wärme auf das zweite Wärmeträgermedium im zweiten Wärmeträgermediumkreislauf 40 übertragen kann. Wird das Wärmepumpensystem 42 im Kühlbetrieb betrieben, so dass über die dritte Wärmetauscheranordnung 38 Wärme abzuführen ist, kann bei deaktiviertem Heizgerät 18 diese Wärme über das erste Wärmeträgermedium und die zweite Wärmetauscheranordnung 26 auf das Energiespeichermaterial 36, also das Betriebsmittel 24 oder/und das Phasenwechselmaterial 34, übertragen werden, um dort für die spätere Verwendung Energie zu speichern. Selbstverständlich kann dem Wärmepumpensystem 42 neben der dritten Wärmetauscheranordnung 38, in welcher eine Wärmetausch zwischen dem zweiten Wärmeträgermedium und dem ersten Wärmeträgermedium erfolgt, eine weitere Wärmetauscheranordnung zugeordnet sein, in welcher nach Art eines in einem herkömmlichen Fahrzeug vorgesehenen Kühlers Wärme auf die Umgebungsluft übertragen und somit aus dem zweiten Wärmeträgermedium abgeführt werden kann. Grundsätzlich könnte auch die dritte Wärmetauscheranordnung 38 zur Umströmung mit Umgebungsluft ausgebildet sein, um diese Funktionalität in die dritte Wärmetauscheranordnung 38 zu integrieren.

Um dann, wenn in Betriebsphasen, in welchen öfter bzw. über längere Zeitdauern hinweg das Fahrzeugtemperiersystem 10 beispielsweise im Sommer zum Kühlen betrieben werden soll, dafür zu sorgen, dass der Betriebsmitteltank 20 wiederholt thermisch aufgeladen werden kann, also zur Aufnahme von Wärme bereitsteht, kann beispielsweise dann, wenn ein Fahrzeug nicht in Betrieb ist, im Betriebsmitteltank 20 gespeicherte Wärme über den ersten Wärmeträgermediumkreislauf 12 und den darin vorgesehenen dritten Wärmetauscher 38 abgegeben werden. Dazu kann beispielsweise vorgesehen sein, dass über den Wärmetauscher 38 Wärme auch zur Umgebung hin, also nicht in einen im Betrieb grundsätzlich zu kühlenden Fahrzeuginnenraum, abgegeben wird. Dieser Vorgang wird vorzugsweise bei Nacht durchgeführt, wenn von niedrigeren Umgebungstemperaturen ausgegangen werden kann. Alternativ oder zusätzlich könnte über den Heiz-Wärmetauscher 80 und einen nach außen führenden Kanal Wärme abgegeben werden.

Bei dem Fahrzeugtemperiersystem 10 dient der Betriebsmitteltank 20 mit dem darin enthaltenen Betriebsmittel 24 bzw. Phasenwechselmaterial 34 als Energiespeicher, welcher einerseits durch die thermische Wechselwirkung des zweiten Wärmeträgermediums mit dem ersten Wärmeträgermedium oder/und den Betrieb des Heizgeräts 18 geladen werden kann und andererseits bei entsprechendem Wärmebedarf über das erste Wärmeträgermedium Wärme an das zweite Wärmeträgermedium abgeben kann. Somit wird es möglich, das Wärmepumpensystem 42 auch bei vergleichsweise hohen bzw. vergleichsweise niedrigen Umgebungstemperaturen mit hohem Wirkungsgrad zu betreiben, da dieses über die dritte Wärmetauscheranordnung 38 an das im Bereich des Betriebsmitteltanks 20 bereitgestellte Speichersystem angebunden ist und somit bei Bedarf Energie in dieses Speichersystem eingetragen oder aus diesem abgezogen werden kann.

Weiterhin kann das Betriebsmittel 24 nicht nur als Brennstoff für das Heizgerät 18 genutzt werden, sondern auch für eine Optimierung der Wischflüssigkeit bzw. des in einer Brennkraftmaschine zu verbrennendem Brennstoffs und somit einem verminderten Schadstoffausstoß genutzt werden. Da im Betrieb nur vergleichsweise geringe Mengen des Betriebsmittels 24 erforderlich sind, kann der Betriebsmitteltank 20 mit einem vergleichsweise kleinen Speichervolumen im Bereich von 15 bis 20 Litern bereitgestellt werden, so dass auch über eine längere Betriebsphase hinweg ein Nachfühlen von Betriebsmittel 24 nicht erforderlich ist. Selbstverständlich ist der Betriebsmitteltank 20 zur Anpassung an den sich verändernden Pegel des darin enthaltenen Betriebsmittels 24 mit einem Ausgleichsvolumen bzw. Entlüftungsöffnungen ausgestattet, ebenso wie der Wischflüssigkeitstank 24 bzw. der Brennstofftank 62.

Das Fahrzeugtemperiersystem 10 kann modulartig bereitgestellt sein, wobei ein durch die Linie L₁ angezeigtes Modul als Grundmodul sowohl für den Einsatz in einem elektromotorisch betriebenen Fahrzeug als auch den Einsatz in einen Fahrzeug mit Verbrennungsmotor, beispielsweise ein Hybrid-Fahrzeug, geeignet ist. Bei Einsatz in einem mit einer Brennkraftmaschine ausgestatteten Fahrzeug umfasst das Temperiersystem 10, wie durch die Linie L₂ indiziert, auch den Brennstofftank 62, zu welchem über das Betriebsmittel-Umschaltventil 52 bei Bedarf Betriebsmittel gefördert werden kann.

In dem durch die Linie L₁ umrissenen Modul kann das Heizgerät 18 beispielsweise auch als rein elektrisch oder nur mit Brennstoff zu betreibendes Heizgerät aufgebaut sein. Grundsätzlich kann das Heizgerät 18 auch als Modul aufgebaut sein und in einer ersten, kostengünstigen Ausbaustufe nur die elektrisch erregbare Heizanordnung 44 aufweisen. Der Brennerbereich 46 kann bei Bedarf nachgerüstet werden.

Im Betrieb des Fahrzeugtemperiersystems 10 kann, wie bereits erwähnt, als Betriebsmittel 24 in vorteilhafter Weise reines Ethanol eingesetzt werden, da dieses sich sowohl für die Verbrennung im Heizgerät 18, als auch als Additiv im Wischflüssigkeitstank 54 und im Brennstofftank 62 eignet.

Es ist abschließend darauf hinzuweisen, dass insbesondere auch das in Fig. 2 dargestellte Wärmepumpensystem 42 nur in prinzipartiger Weise gezeigt ist und mit Bezug auf die wesentlichen Systembereiche desselben beschrieben wurde. Auch dieses System kann in verschiedensten Aspekten baulich abgeändert werden, sofern dies in Anpassung an einen jeweils vorgesehenen Einsatzzweck vorteilhaft ist. Auch im Bereich des ersten Wärmeträgermediumkreislaufs können bauliche Abwandlungen realisiert werden. So könnte beispielsweise in einer weiteren Wärmetauscheranordnung im Bereich einer Brennkraftmaschine generierte und im Verbrennungsabgas derselben transportierte Wärme auf das erste Wärmeträgermedium übertragen und über dieses in das Energiespeichermaterial eingetragen werden.

Im Sommerbetrieb, in welchem insbesondere eine Beimengung von dem Gefrierpunkt der Wischflüssigkeit absenkendem Additiv nicht erforderlich ist, könnte aus Kostengründen und aus Gründen der höheren Wärmespeicherkapazität als Betriebsmittel Wasser eingesetzt werden.

## Patentansprüche

1. Fahrzeugtemperiersystem, insbesondere für Hybrid-Fahrzeuge, umfassend:
- ein mit Brennstoff betreibbares Heizgerät (18) mit einer ersten Wärmetauscheranordnung (16) zur Übertragung von in dem Heizgerät (18) bereitgestellter Wärme auf in einem ersten Wärmeträgermediumkreislauf (12) vorgesehenes erstes Wärmeträgermedium,
- einen Betriebsmitteltank (20) zur Aufnahme eines flüssigen Betriebsmittels (24),
- eine zweite Wärmetauscheranordnung (26) zur Wärmeübertragung zwischen dem im ersten Wärmeträgermediumkreislauf (12) vorgesehenen ersten Wärmeträgermedium und in dem Betriebsmitteltank (20) enthaltenem Energiespeichermaterial (36),
- eine dritte Wärmetauscheranordnung (38) zur Wärmeübertragung zwischen dem im ersten Wärmeträgermediumkreislauf (12) vorgesehenen ersten Wärmeträgermedium und in einem zweiten Wärmeträgermediumkreislauf (40) vorgesehenem zweiten Wärmeträgermedium,
- eine Betriebsmittelpumpe (50) in einer Betriebsmittelleitung (48) zum Fördern von in dem Betriebsmitteltank (20) enthaltenem Betriebsmittel (24) als Brennstoff zu einem Brennerbereich (46) des Heizgeräts (18) und zum Fördern von in dem Betriebsmitteltank (20) enthaltenem Betriebsmittel (24) als Brennstoffadditiv zu einem Brennstofftank (62) für eine Brennkraftmaschine.

2. Fahrzeugtemperiersystem nach Anspruch 1, **dadurch gekennzeichnet, dass** der erste Wärmeträgermediumkreislauf (12) eine Wärmeträgermediumpumpe (14) zum Fördern des ersten Wärmeträgermediums durch die erste Wärmetauscheranordnung (16), die zweite Wärmetauscheranordnung (26) und die dritte Wärmetauscheranordnung (38) umfasst.

3. Fahrzeugtemperiersystem nach Anspruch 1 oder 2, **dadurch gekennzeichnet, dass** das Energiespeichermaterial (36) in dem Betriebsmitteltank (20) enthaltenes Betriebsmittel (24) umfasst, und dass die zweite Wärmetauscheranordnung (26) einen ersten Wärmetauscherbereich (28) zur Übertragung von Wärme zwischen dem ersten Wärmeträgermedium und dem in dem Betriebsmitteltank (20) enthaltenen Betriebsmittel (24) umfasst.

4. Fahrzeugtemperiersystem nach einem der vorangehenden Ansprüche, **dadurch gekennzeichnet, dass** in dem Betriebsmitteltank (20) eine Phasenwechselmaterial-Energiespeicheranordnung (32) vorgesehen ist, wobei das Energiespeichermaterial (36) in der Phasenwechselmaterial-Energiespeicheranordnung (32) vorgesehenes Phasenwechselmaterial (34) umfasst, und dass die zweite Wärmetauscheranordnung (26) einen zweiten Wärmetauscherbereich (30) zur Übertragung von Wärme zwischen dem ersten Wärmeträgermedium und dem Phasenwechselmaterial (34) umfasst.

5. Fahrzeugtemperiersystem nach einem der vorangehenden Ansprüche, **dadurch gekennzeichnet ist, dass** in der Betriebsmittelleitung (48) stromabwärts der Betriebsmittelpumpe (50) ein Betriebsmittel-Umschaltventil (52) vorgesehen ist, wobei das Betriebsmittel-Umschaltventil (52) dazu ausgebildet ist, wahlweise eine Verbindung zwischen der Betriebsmittelleitung (48) und dem Brennerbereich (46) des Heizgeräts (18) oder/und dem Brennstofftank (62) herzustellen.

6. Fahrzeugtemperiersystem nach Anspruch 5, **dadurch gekennzeichnet ist, dass** die Betriebsmittelpumpe (50) ferner zum Fördern von in dem Betriebsmitteltank (20) enthaltenem Betriebsmittel (24) als Wischflüssigkeitsadditiv zu einem Wischflüssigkeitstank (54) vorgesehen ist, und dass das Betriebsmittel-Umschaltventil (52) dazu ausgebildet ist, wahlweise eine Verbindung zwischen der Betriebsmittelleitung (48) und dem Brennerbereich (46) des Heizgeräts (18) oder/und dem Wischflüssigkeitstank (54) oder/und dem Brennstofftank (62) herzustellen.

7. Fahrzeugtemperiersystem nach einem der vorangehenden Ansprüche, **dadurch gekennzeichnet, dass** das Heizgerät (18) eine elektrisch erregbare Heizanordnung (44) zur Erwärmung des ersten Wärmeträgermediums in der ersten Wärmetauscheranordnung (18) umfasst.

8. Fahrzeugtemperiersystem nach Anspruch 7, **dadurch gekennzeichnet, dass** die elektrisch erregbare Heizanordnung (44) eine PTC-Heizanordnung umfasst.

9. Fahrzeugtemperiersystem nach einem der vorangehenden Ansprüche, **dadurch gekennzeichnet, dass** dem zweiten Wärmeträgermediumkreislauf (40) ein Wärmepumpensystem (42) zugeordnet ist, wobei das Wärmepumpensystem (42) dazu ausgebildet ist, im Bereich der dritten Wärmetauscheranordnung (38) Wärme von dem zweiten Wärmeträgermedium auf das erste Wärmeträgermedium zu übertragen oder Wärme von dem ersten Wärmeträgermedium im zweiten Wärmeträgermedium aufzunehmen.

10. Fahrzeugtemperiersystem nach einem der vorangehenden Ansprüche, **dadurch gekennzeichnet, dass** das in dem Betriebsmitteltank (20) enthaltene Betriebsmittel Ethanol ist oder enthält.

11. Fahrzeugtemperiersystem nach einem der vorangehenden Ansprüche, **dadurch gekennzeichnet, dass** der Betriebsmitteltank (20) mit Isoliermaterial (22) umgeben ist.

## Claims

1. Vehicle temperature control system, especially for hybrid vehicles, comprising:
- a heater (18), which can be operated with fuel, with a first heat exchanger device (16) for transferring heat provided in the heater (18) to a first heat carrier medium provided in a first heat carrier medium circuit (12),
- an operating material tank (20) for holding a liquid operating material (24),
- a second heat exchanger device (26) for heat transfer between the first heat carrier medium provided in the first heat carrier medium circuit (12) and energy storage material (36) contained in the operating material tank (20),
- a third heat exchanger device (38) for heat transfer between the first heat carrier medium provided in the first heat carrier medium circuit (12) and the second heat carrier medium provided in a second heat carrier medium circuit (40),
- an operating material pump (50) in an operating material line (48) for delivering operating material (24) contained in the operating material tank (20) as fuel to a burner area (46) of the heater (18) and for delivering operating material (24) contained in the operating material tank (20) as fuel additive to a fuel tank (54) for a combustion engine.

2. Vehicle temperature control system in accordance with claim 1, **characterized in that** the first heat carrier medium circuit (12) comprises a heat carrier medium pump (14) for delivering the first heat carrier medium through the first heat exchanger device (16), the second heat exchanger device (26) and the third heat exchanger device (38).

3. Vehicle temperature control system in accordance with claim 1 or 2, **characterized in that** the energy storage material (36) comprises operating material (24) contained in the operating material tank (20), and that the second heat exchanger device (26) comprises a first heat exchanger area (28) for transferring heat between the first heat carrier medium and the operating material (24) contained in the operating material tank (20).

4. Vehicle temperature control system in accordance with one of the preceding claims, **characterized in that** a phase change material energy storage device (32) is provided in the operating material tank (20), wherein the energy storage material (36) comprises phase change material (34) provided in the phase change material energy storage device (32), and that the second heat exchanger device (26) comprises a second heat exchanger area (30) for transferring heat between the first heat carrier medium and the phase change material (34).

5. Vehicle temperature control system in accordance with one of the preceding claims, **characterized in that** an operating material reversing valve (52) is provided in the operating material line (48) downstream of the operating material pump (50), wherein the operating material reversing valve (52) is configured optionally to establish a connection between the operating material line (48) and the burner area (46) of the heater (18) or/and the fuel tank (62).

6. Vehicle temperature control system in accordance with claim 5, **characterized in that** the operating material pump (50) is further provided for delivering operating material (24) contained in the operating material tank (20) as a wiper fluid additive to a wiper fluid tank (54) and that the operating material reversing valve (52) is configured optionally to establish a connection between the operating material line (48) and the burner area (46) of the heater (18) or/and the wiper fluid tank (54) or/and the fuel tank (62).

7. Vehicle temperature control system in accordance with one of the preceding claims, **characterized in that** the heater (18) comprises an electrically energizable heating device (44) for heating the first heat carrier medium in the first heat exchanger device (18).

8. Vehicle temperature control system in accordance with claim 7, **characterized in that** the electrically energizable heating device (44) comprises a PTC heating device.

9. Vehicle temperature control system in accordance with one of the preceding claims, **characterized in that** a heat pump system (42) is associated with the second heat carrier medium circuit (40), wherein the heat pump system (42) is configured to transfer heat in the area of the third heat exchanger device (38) from the second heat carrier medium to the first heat carrier medium or to absorb heat from the first heat carrier medium in the second heat carrier medium.

10. Vehicle temperature control system in accordance with one of the preceding claims, **characterized in that** the operating material contained in the operating material tank (20) is or contains ethanol.

11. Vehicle temperature control system in accordance with one of the preceding claims, **characterized in that** the operating material tank (20) is enclosed with insulating material (22).

## Revendications

1. Système de contrôle de la température d'un véhicule, notamment pour les véhicules hybrides, comprenant :
- un appareil de chauffage (18), opérable avec du carburant, avec un premier agencement d'échangeur de chaleur (16) pour transférer la chaleur fournie dans l'appareil de chauffage (18) à un premier médium caloporteur fourni dans un premier circuit de médium caloporteur (12),
- un réservoir de moyen de fonctionnement (20) destiné à contenir un moyen de fonctionnement liquide (24),
- un deuxième agencement d'échangeur de chaleur (26) pour transférer la chaleur entre le premier médium caloporteur prévu dans le premier circuit de médium caloporteur (12) et le matériau de stockage d'énergie (36) contenu dans le réservoir de moyen de fonctionnement (20),
- un troisième agencement d'échangeur de chaleur (38) pour transférer la chaleur entre le premier médium caloporteur prévu dans le premier circuit de médium caloporteur (12) et le deuxième médium caloporteur prévu dans un deuxième circuit de médium caloporteur (40),
- une pompe à moyen de fonctionnement (50) dans une conduite de moyen de fonctionnement (48) pour délivrer le moyen de fonctionnement (24) contenue dans le réservoir de moyen de fonctionnement (20) comme combustible à une zone de brûleur (46) de l'appareil de chauffage (18) et pour délivrer le moyen de fonctionnement (24) contenue dans le réservoir de moyen de fonctionnement (20) comme additif de combustible à un réservoir de combustible (54) pour un moteur à combustion interne.

2. Système de contrôle de la température d'un véhicule selon la revendication 1, **caractérisé en ce que** le premier circuit de médium caloporteur (12) comprend une pompe à médium caloporteur (14) pour délivrer le premier médium caloporteur à travers le premier agencement d'échangeur de chaleur (16), le deuxième agencement d'échangeur de chaleur (26) et le troisième agencement d'échangeur de chaleur (38).

3. Système de contrôle de la température d'un véhicule selon la revendication 1 ou 2, **caractérisé en ce que** le matériau de stockage d'énergie (36) comprend un moyen de fonctionnement (24) contenu dans le réservoir de moyen de fonctionnement (20), et **en ce que** le deuxième agencement d'échangeur de chaleur (26) comprend une première zone d'échangeur de chaleur (28) pour transférer la chaleur entre le premier médium caloporteur et le moyen de fonctionnement (24) contenu dans le réservoir de moyen de fonctionnement (20).

4. Système de contrôle de la température d'un véhicule selon l'une des revendications précédentes, **caractérisé en ce qu'**un dispositif de stockage d'énergie à matériau de changement de phase (32) est prévu dans le réservoir de moyen de fonctionnement (20), dans lequel le matériau de stockage d'énergie (36) comprend un matériau de changement de phase (34) prévu dans le dispositif de stockage d'énergie à matériau de changement de phase (32), et **en ce que** le deuxième agencement d'échangeur de chaleur (26) comprend une deuxième zone d'échangeur de chaleur (30) pour transférer la chaleur entre le premier médium caloporteur et le matériau de changement de phase (34).

5. Système de contrôle de la température d'un véhicule selon l'une des revendications précédentes, **caractérisé en ce qu'**une vanne d'inversion du moyen de fonctionnement (52) est prévue dans la conduite de moyen de fonctionnement (48) en aval de la pompe de moyen de fonctionnement (50), dans lequel la vanne d'inversion du moyen de fonctionnement (52) est adaptée au choix pour établir une connexion entre la conduite de moyen de fonctionnement (48) et la zone de brûleur (46) de l'appareil de chauffage (18) et/ou le réservoir de carburant (62).

6. Système de contrôle de la température d'un véhicule selon la revendication 5, **caractérisé en ce que** la pompe de moyen de fonctionnement (50) est en outre prévue pour délivrer un moyen de fonctionnement (24) contenu dans le réservoir de moyen de fonctionnement (20) en tant qu'additif de fluide d'essuie-glace à un réservoir de fluide d'essuie-glace (54) et **en ce que** la vanne d'inversion de moyen de fonctionnement (52) est configurée pour établir facultativement une connexion entre la ligne de moyen de fonctionnement (48) et la zone de brûleur (46) de l'appareil de chauffage (18) ou/et le réservoir de fluide d'essuie-glace (54) ou/et le réservoir de carburant (62).

7. Système de contrôle de la température d'un véhicule selon l'une des revendications précédentes,
**caractérisé en ce que** l'appareil de chauffage (18) comprend un agencement de chauffage (44) pouvant être excité électriquement pour chauffer le premier médium caloporteur dans le premier agencement d'échangeur de chaleur (18).

8. Système de contrôle de la température d'un véhicule selon la revendication 7, **caractérisé en ce que** l'agencement de chauffage pouvant être excité électriquement (44) comprend un agencement de chauffage CTP.

9. Système de contrôle de la température d'un véhicule selon l'une des revendications précédentes, **caractérisé en ce qu'**un système de pompe à chaleur (42) est associé au deuxième circuit de médium caloporteur (40), dans lequel le système de pompe à chaleur (42) est adapté pour transférer la chaleur dans la zone du troisième agencement d'échange de chaleur (38) du deuxième médium caloporteur au premier médium caloporteur ou pour absorber de la chaleur du premier médium caloporteur dans le deuxième médium caloporteur.

10. Système de contrôle de la température d'un véhicule selon l'une des revendications précédentes, **caractérisé en ce que** le moyen de fonctionnement contenu dans le réservoir de moyen de fonctionnement (20) est ou contient de l'éthanol.

11. Système de contrôle de la température d'un véhicule selon l'une des revendications précédentes, **caractérisé en ce que** le réservoir de moyen de fonctionnement (20) est entouré d'un matériau isolant (22).
